# EUROPÄISCHE PATENTSCHRIFT

(11) **EP 0 667 251 B1**
(45) Veröffentlichungstag und Bekanntmachung des Hinweises auf die Patenterteilung: **22.10.1997**
(21) Anmeldenummer: 95101776.3
(22) Anmeldetag: 09.02.1995
(51) Int. Cl.: B60C 11/00, B60C 11/24

(54) **Fahrzeugluftreifen mit einem Signalelement**
Vehicle tyre with indicator element
Pneumatique avec élément de signalisation

(30) Priorität: 10.02.1994 DE 4404171
(43) Veröffentlichungstag der Anmeldung: 16.08.1995
(73) Patentinhaber: Continental Aktiengesellschaft, 30165 Hannover (DE)
(72) Erfinder: Pfeiffer, Hans-Dieter, D-30827 Garbsen (DE)

(56) Entgegenhaltungen:
- FR-A- 2 143 064
- GB-A- 2 243 584

## Beschreibung

Die Erfindung betrifft einen Fahrzeugluftreifen mit einem Signalelement, mit einer breiten Mittelrille, die in Reifenumfangsrichtung verläuft, wobei der Fahrzeugluftreifen einen ein Farb- und/oder Formsignal erzeugenden Abnutzungindikator aufweist.

Es sind sogenannte Weißwandreifen bekannt, bei denen sich im Seitenwandbereich weiße Streifen befinden. Diese Reifen richten sich an den ästhetischen Geschmack und haben keine technische Bedeutung erlangt. Es sind weiterhin Fahrradreifen bekannt, bei denen sich in den Seitenwände reflektierende Pigmente befinden, so daß ein Autofahrer in der Dunkelheit ein die Fahrbahn kreuzendes Fahrrad besser erkennen kann. Beide Anwendungsfälle sind nicht geeignet, bei hintereinander fahrenden Fahrzeugen den hinteren Fahrer vor dem vorherfahrenden Fahrzeug zu warnen.

Es ist weiterhin aus der Druckschrift DE 91 02 607 U1 eine Vorrichtung an Fahrzeugreifen bekannt, um diese bei Dunkelheit sichtbar zu machen. Bei dieser Vorrichtung handelt es sich um reflektierende Teile, reflektierende Schichten oder reflektierende Farben, die in das Profil eines Reifens eingebracht werden. Dabei ist zu beachten, daß es sich gemäß den Figuren um einen konventionellen Reifen handelt, der Umfangsrillen normaler Breite jedoch keine extra breit ausgebildete Mittelrille aufweist. Farbschichten am Grund dieser normalen Umfangsrillen mögen zwar bei Dunkelheit eine ausreichende Signalwirkung erzeugen doch reichen sie vermutlich nicht aus, auch bei Tageslicht eine erhebliche Signalwirkung hervorzurufen. Durch die Druckschrift wird an keiner Stelle der Gedanken nahe gelegt, die reflektierenden Schichten gleichzeitig als Abnutzungsindikator und/oder als Markierung für eine Laufrichtung bei einem drehsinngebundenen Profil einzusetzen.

Die GB-A-2 243 584 zeigt einen Abriebindikator, bei dem ein aus mehreren unterschiedlichen Farbschichten aufgebautes Gummisegment innerhalb der Lauffläche eingelassen ist und abhängig vom Abrieb und von der Laufleistung des Reifens kontinuierlich oder stufenweise einen Farbwechsel produziert, der ein sichtbares Signal für die Abnutzung des Reifens darstellt.

Ein solcher Abnutzungsindikator, der im wesentlichen in gleichem Maße wie die Lauffläche der Abnutzung unterworfen ist, zeigt sich insofern als nachteilig als sich die durch ihn dargebotene Information über die Nutzungsdauer des Reifens ständig ändert und in ihrer Signalwirkung für nicht abnutzungsabhängige Informationen nicht zu nutzen ist.

Einen ähnlichen Nachteil weist die in der FR-A 2 143 064 offenbarte Profilausbildung auf, bei der eine dünne Schicht aus farblich unterschiedlichem Matrial über die gesamte Lauffläche gezogen wird. Je nach Abrieb und Profiltiefe ändert sich dann das Erscheinungsbild der Lauffläche, so dass ein sich stetig änderndes Signal erzeugt wird, welches eine Aussage über den Abnutzungszustand zuläßt.

In jüngster Zeit sind Hochleistungsreifen für Pkw entwickelt worden, die ein erheblich verbessertes Aquaplaningverhalten aufweisen. Es handelt sich um Breitreifen mit einer breiten Mittelrille, die darüber hinaus in der Längskraftübertragung und in der Querkraftübertragung optimiert worden sind. Werden diese Reifen zusätzlich bei einem mit ABS versehenen Fahrzeug eingesetzt, ergeben sich für das Fahrzeug erheblich verkürzte Bremswege auf nasser Straße sowie ein erheblich verbessertes Kurvenverhalten. Dabei besteht die Gefahr, daß ein nachfolgendes Fahrzeug die verbesserten Eigenschaften des vorherfahrenden Fahrzeugs nicht erkennt und somit keinen ausreichenden Sicherheitsabstand einhält. Dies kann z.B. beim Bremsen des vorherfahrenden Fahrzeugs leicht zu Notsituationen führen, weil das nachfolgende Fahrzeug einen erheblich längeren Bremsweg hat.

Der Erfindung liegt die Aufgabe zugrunde, einen Fahrzeugreifen der eingangs genannten Art so zu verbessern, daß einerseits auf nasser Straße nachfolgende Fahrer gewarnt werden, daß sich vor ihnen ein Fahrzeug mit einem möglicherweise erheblich kürzeren Bremsweg und/oder besseren Kurvenverhalten befindet, so daß ein erhöhter Sicherheitsabstand ratsam erscheint, und daß andererseits das vorgesehene Signalelement eine zusätzliche Funktion am Reifen übernimmt.

Diese Aufgabe wird erfindungsgemäß dadurch gelöst, dass sich das Signalelement auf der während der Abnutzung der Reifenlauffläche geschützten Grundfläche der breiten Mittelrille befindet und sich in seiner Farbe von der in der Regel schwarzen Farbe der Lauffläche unterscheidet, wobei das Signalelement gleichzeitig als Abnutzungsindikator ausgebildet ist.

Eine weitere Lösung der Erfindung ist dadurch gegeben, daß das Signalelement aus Farbpfeilen besteht, die die vorgeschriebene Drehrichtung anzeigen.

Die Erfindung bietet mehrere Vorteile: Durch Anbringen des Signalelements in der breiten Mittelrille wird es in seiner vollen Breite vom nachfolgenden Fahrer erfaßt. Darüber hinaus liegt es in der breiten und tiefen Mittelrille geschützt und wird auch während der Abnutzung der Reifenlauffläche nicht beeinträchtigt. Ein weiterer Vorteil ergibt sich dadurch, daß das Signalelement zusätzlich als Abnutzungsindikator für einen verbrauchten Reifen und/oder als Drehrichtungsanzeiger bei einem drehrichtungsgebundenen Reifen verwendet wird.

Als Farben für das Signalelement können die Farben weiß, gelb, blau, rot und grün eingesetzt werden, wobei sie bevorzugt als stark reflektierende Signalfarben zum Einsatz kommen sollten. Weiterhin sind Mischfarben möglich, soweit sie ausreichend leuchten. Nach einer bevorzugten Ausführungsform der Erfindung nimmt das Signalelement als Farbstreifen im wesentlichen die gesamte Grundfläche der Mittelrille ein. Dabei kann der Farbstreifen als dünne Deckschicht auf dem Kautschuk des Laufstreifens vorliegen, ebenfalls aus Kautschuk oder Kunststoff bestehen und unlösbar mit dem Laufstreifen verbunden sein.

Gemäß einer weiteren Ausgestaltung der Erfindung liegt das Signalelement als lösbares Farbband aus Kautschuk oder Kunststoff in der Mittelrille vor. Dies hat den Vorteil, daß das Signalelement im Falle einer Beeinträchtigung durch Ölverschmutzungen auf einfache Weise erneuert werden kann.

Weiterhin kann das Sinalelement aus einem regelmäßig oder unregelmäßig in Umfangsrichtung unterbrochenen Farbstreifen bestehen. Dabei können die Zwischenräume schwarz oder aber andersfarbig ausgebildet sein, so daß ein Mehrfarbenmuster entsteht. Schließlich ist es auch möglich, das Signalelement aus Buchstaben oder Ziffern oder Kombinationen daraus aufzubauen.

Bei drehsinngebundenen Profilen wird vorgeschlagen, das Signalelement aus Farbpfeilen aufzubauen, die dann den zusätzlichen Zweck erfüllen, die vorgeschriebene Drehrichtung für den Reifen anzuzeigen.

Es ist entweder möglich, das Signalelement flächig auf der Grundfläche der Mittelrille anzuordnen oder aber erhaben aus ihr heraustretend. Für den Fall, daß die Signalelemente erhaben hervortreten, können sie zusätzlich als Abnutzungsindikator eingesetzt werden und dabei den Zustand des Reifens anzeigen, bei dem eine Ausmusterung erforderlich ist.

Nachfolgend werden mehrere Ausführungsbeispiele der Erfindung anhand einer Zeichnung näher erläutert. Es zeigt
- Fig. 1: einen radialen Teilschnitt eines Reifens mit einem auf der Grundfläche der Mittelrille befindlichen Farbstreifen,
- Fig. 2: einen radialen Teilschnitt mit einem in der Mittelrille eingelegten Farbband,
- Fig. 3: einen Reifen in einer Draufsicht mit einem unterbrochenen Farbstreifen in der Mittelrille,
- Fig. 4: einen drehsinngebundenen Reifen in einer Draufsicht mit Richtungspfeilen als Signalelement,
- Fig. 5: einen Reifen in einem radialen Teilschnitt mit einem in der Mittelrille erhaben angebrachten Richtungspfeil,
- Fig. 6: einen Reifenausschnitt in einer Draufsicht mit einem Schriftzug als Signalelement.

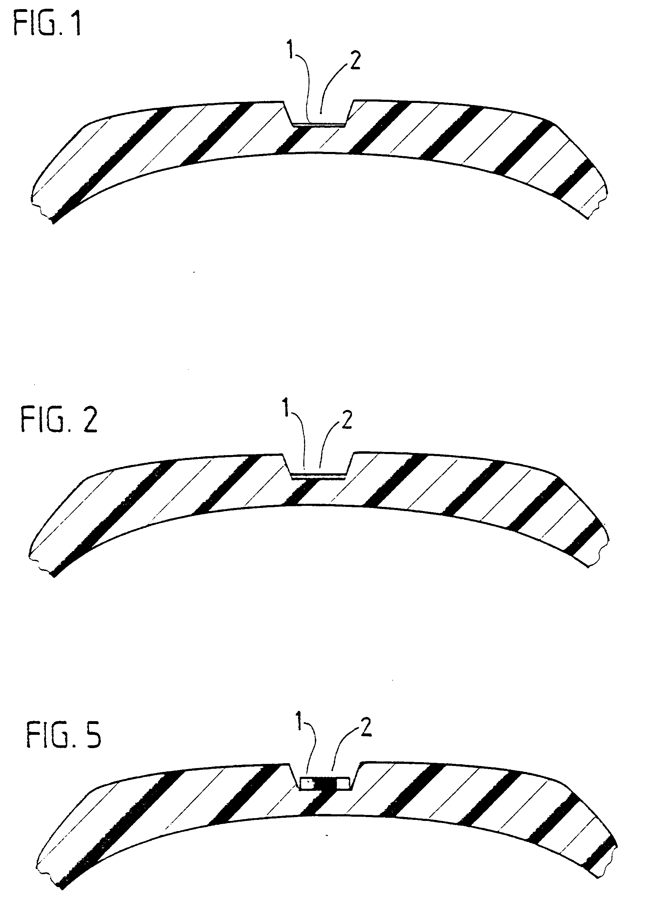

Der Reifen der Fig. 1 ist in einem radialen Teilschnitt in stark schematisierter Weise dargestellt. Als Signalelement 1 befindet sich ein Farbstreifen auf der Grundfläche einer breiten Mittelrille 2, die im wesentlichen eine Tiefe aufweisen kann, vergleichbar der Tiefe der übrigen (nicht gezeichneten) Profilrillen. Der Farbstreifen kann durch Auftragen von Farbe erzeugt werden oder aber durch Einbringung von Farbpartikeln in die obere Schicht des Laufstreifens im Bereich der Mittelrille 2.

Das Beispiel der Fig. 2 unterscheidet sich von dem der Fig. 1 dadurch, daß als Signalelement 1 ein Farbband in die Mittelrille 2 eingelegt ist. Dabei kann das Farbband z.B. aus einem Gummiband oder einem dehnbaren Kunststoffband bestehen. Es ergibt sich der Vorteil, daß das Farbband nicht mit dem Reifen mitvulkanisiert wird, sondern erst nachträglich eingelegt wird, so daß sich keine fertigungstechnischen Probleme ergeben und das Farbband darüber hinaus austauschbar ist.

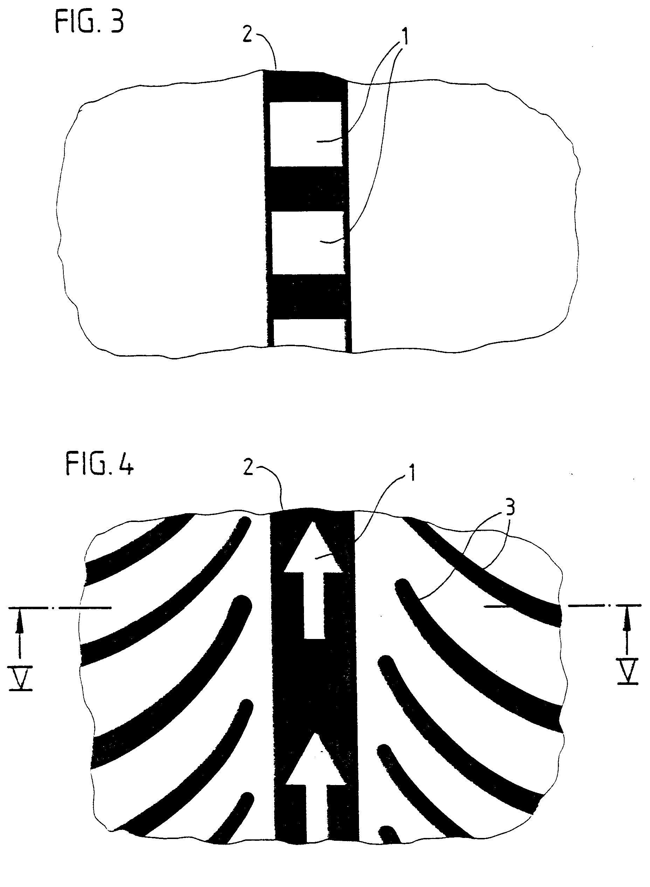

In Beispiel der Fig. 3 besteht das Signalelement aus einem unterbrochenen Farbband, wobei die Abstände zwischen den einzelnen Farbabschnitten regelmäßig oder auch unregelmäßig gewählt sein können. Den Eindruck eines unterbrochenen Farbbandes kann man auch dadurch erzielen, daß andersfarbige Farbabschnitte aufeinanderfolgen.

Im Beispiel der Fig. 4 ist ein drehsinngebundener Reifen in einer Teildraufsicht dargestellt. Wie man den geschwungenen Rippen 3 in den beiden Hälften des Reifens entnehmen kann, ergibt sich der Drehsinn in der dargestellten Pfeilrichtung. Die dargestellten Pfeile dienen zum einen als Signalelement 1, zum anderen als Anzeige für den Drehsinn.

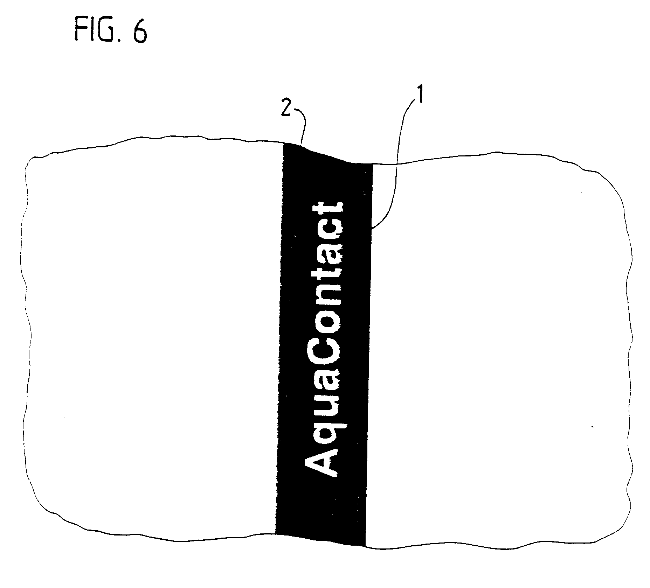

Im Beispiel der Fig. 5 befindet sich in der Mittelrille 2 als Signalelement 1 wiederum ein Richtungspfeil, der erhaben aus der Grundfläche der Mittelrille 2 hervortritt. Seine Höhe kann 2 bis 5 mm betragen. In Fig. 5 hat er im wesentlichen die Höhe, bei der der Reifen ausgemustert werden muß, wenn das Profil in den beiden Hälften bis zu dieser Höhe abgenutzt worden ist. Es bietet sich an, den unteren Teil des Pfeils bei der Reifenherstellung aus schwarzem Gummi herzustellen und lediglich eine dünne Oberfläche farbig auszubilden. Bei Abnutzung des Reifenprofils nutzt sich diese farbige Oberfläche dann sehr schnell ab, so daß der Pfeil als Abnutzungsindikator zur Anzeige eines verbrauchten Reifens eingesetzt wird.

Schließlich wird in Fig. 6 eine Variante dargestellt, bei der das Signalelement 1 aus einem Schriftzug besteht. Dieser Schriftzug kann sich in geringen Abständen über den Reifenumfang wiederholen oder von anderen Schriftzügen abgelöst werden. Selbstverständlich ist es auch möglich, Kombinationen aus Buchstaben oder Ziffern zu verwenden.

## Patentansprüche

1. Fahrzeugluftreifen mit einem Signalelement (1), mit einer Laufflächenprofilgestaltung mit einer breiten Mittelrille (2), die in Reifenumfangsrichtung verläuft, wobei der Fahrzeugluftreifen einen ein Farb- und/oder Formsignal erzeugenden Abnutzungsindikator aufweist,
**dadurch gekennzeichnet,**
dass sich das Signalelement (1) auf der während der Abnutzung der Reifenlauffläche geschützten Grundfläche der breiten Mittelrille (2) befindet und sich in seiner Farbe von der in der Regel schwarzen Farbe der Lauffläche unterscheidet, wobei das Signalelement (1) gleichzeitig als Abnutzungindikator ausgebildet ist.

2. Fahrzeugluftreifen nach Anspruch 1, dadurch gekennzeichnet, dass er ein drehsinngebundenes Profil aufweist und dass das Signalelement (1) aus Farbpfeilen besteht, die die vorgeschriebene Drehrichtung anzeigen.

3. Fahrzeugluftreifen nach Anspruch 1 oder 2, dadurch gekennzeichnet, dass das Signalelement (1) als lösbares Farbband in die breite Mittelrille (2) eingelegt ist.

## Claims

1. Pneumatic vehicle tyre, having a signalling element (1) provided with a tread surface profile configuration and a wide central groove (2), which extends in the circumferential direction of the tyre, the pneumatic vehicle tyre having a wear indicator which produces a coloured and/or shaped signal, characterised in that the signalling element (1) is situated on the bottom surface of the wide central groove (2), which surface is protected during the tread surface wear of the tyre, and the colour of said signalling element contrasts with the colour of the tread surface which is generally black, the signalling element (1) being also configured as a wear indicator.

2. Pneumatic vehicle tyre according to claim 1, characterised in that it has a profile which is adapted to the direction of rotation, and in that the signalling element (1) comprises coloured arrows which indicate the prescribed direction of rotation.

3. Pneumatic vehicle tyre according to claim 1 or 2, characterised in that the signalling element (1) is inserted into the wide central groove (2) as a detachable coloured strip.

## Revendications

1. Pneumatique de véhicule, pourvu d'un élément de signalisation (1) et comportant un profil de surface de roulement pourvu d'une large rainure centrale (2), qui est orientée dans la direction circonférentielle du pneumatique, ce dernier comportant l'indicateur d'usure produisant un signal de couleur et/ou de forme, caractérisé en ce que l'élément de signalisation (1) est situé sur la surface de fond, protégée pendant l'usure de la surface de roulement du pneumatique, de la large rainure centrale (2) et que sa couleur est différente de la couleur, généralement noire, de la surface de roulement, cet élément de signalisation (1) étant agencé simultanément comme un indicateur d'usure.

2. Pneumatique de véhicule selon la revendication 1, caractérisé en ce qu'il comporte un profil lié au sens de rotation et en ce que l'élément de signalisation (1) se compose de flèches colorées qui indiquent le sens de rotation prescrit.

3. Pneumatique de véhicule selon la revendication 1 ou 2, caractérisé en ce que l'élément de signalisation (1) est disposé sous forme d'une bande colorée séparable dans la large rainure centrale (2).
